# EUROPEAN PATENT SPECIFICATION

(11) **EP 2 910 913 B1**
(45) Date of publication and mention of the grant of the patent: **16.10.2019**
(21) Application number: 14156291.8
(22) Date of filing: 24.02.2014
(51) Int. Cl.: G01G 21/28, G01G 23/06

(54) **Method and arrangement for providing weighing results**
Verfahren und Anordnung zur Bereitstellung von Wiegeergebnissen
Procédé et agencement permettant de fournir des résultats de pesage

(43) Date of publication of application: 26.08.2015
(73) Proprietor: TAMTRON OY, 33561 Tampere (FI)
(72) Inventor: Asikainen, Pentti, 33500 Tampere (FI)
(74) Representative: Heinonen & Co

(56) References cited:
- EP-A2- 1 895 281

## Description

### TECHNICAL FIELD OF THE INVENTION

The invention relates to a method and an arrangement for providing weighing results. More particularly, the invention relates to a method and an arrangement for providing weighing results, wherein processed weighing results are provided for a user.

### BACKGROUND OF THE INVENTION

The prior art weighing systems typically consist of weighing sensors and special scales instruments designed for weighing application. Such scales instruments are usually provided with necessary A/D (Analog/Digital) converters for converting sensor signals, a processor, a display unit and a serial port for other peripherals. In some prior art systems, the peripheral device may also be a PC (Personal Computer).

Weighing systems are calibrated in order to achieve a specified weighing accuracy which corresponds to the reliability and stability of components in the weighing system. Often weighing systems are used for commercial purposes, such as weighing goods for determining price of the goods in commercial transactions. In such weighing systems it is especially important that the weighing system fulfils the specified reliability and accuracy requirements.

A weighing result is presented to a user on a display or it may be printed, for example. The weighing result is presented with such an accuracy which corresponds to the reliability of the weighing system. There is normally a fixed minimum increment between two presented non-equal weighing results. This increment is set to correspond to the reliability of the weighing system. This means that the weighing system must not present a weighing result with a more accurate presentation than what is the weighing reliability of the weighing system.

To achieve a specified measurement reliability requires certain environmental conditions. Such conditions may include temperature, humidity, mechanical stability, etc. The weighing system may have sensors for measuring these magnitudes. It is also possible that a weighing system calculates a figure of merit which corresponds to the actual reliability of a measurement result. These methods for determining an actual reliability and reliability of a weighing system are disclosed in European patent publication EP1083417B1. Another similar method is disclosed in EP 1 895 281. The measurement/calculation may then show that the environmental conditions are not within specified range or that the specified weighing reliability is not achieved for other reasons. In such a situation a weighing system is automatically switched to a mode where no weighing results are presented for the user.

The prior art involves certain drawbacks. It is often required to provide weighing in environmental conditions, such as temperature, which do not meet the specified range of the weighing system. For example, a weighing system may allow temperatures in the range -10°C...40°C, whereby an environment with temperature - 15 °C would be out of range. In such conditions it is not possible to get any weighing results with a prior art weighing system even if the user would not need the weighing result to fulfill the reliability specification in that specific weighing. The user must therefore get another weighing system which has a wider range of allowed environmental conditions. However, such weighing systems may not be available or they tend to be expensive.

### SUMMARY OF INVENTION

It is an object of the present invention to overcome or alleviate the above drawbacks associated with the prior art.

In one aspect of the invention, the (minimum) increment for presentation of the measurement result is based on the actual reliability of the weighing system. For example, if the environmental conditions and a figure of merit show that the reliability of the weighing system is within certain specifications, the increment value of presentation corresponds to those specifications. However, if environmental conditions are not within the primary specified range, the increment value of presentation is increased to correspond with the lower actual weighing reliability of the weighing system.

A method of the invention for providing weighing results, wherein weight of a load is measured and weighing result of the measurement is presented, and for presenting weighing results the measurement result data is processed to apply a increment between non-equal values of weighing result presentations, is characterized by
- assessing actual reliability of a weighing result,
- determining said increment value of presentation on the basis of said assessment, and
- processing the measurement result data to apply the determined increment value of presentation in presenting the measured weighing result.

An arrangement of the invention for providing weighing results, the arrangement comprising means for measuring weight of a load and means for presenting a measurement result, and the arrangement further comprising means for processing measurement result data to apply a increment between non-equal values of weighing result presentations, is characterized by comprising
- means for assessing actual reliability of a weighing result,
- means for determining said increment value of presentation on the basis of said assessment, and
- means for processing the measurement result data to apply the determined increment value of presentation in presenting the measured weighing result.

Some preferred embodiments of the invention are set forth in the non-independent claims.

In one embodiment of the invention the assessment of reliability comprises measuring environmental conditions. In a further embodiment the measurement of environmental conditions comprises measurement of acceleration, temperature, electromagnetic radiation, air pressure, humidity, wind speed or wind direction, and/or an angle of inclination. The environmental conditions may also include speed of movement or acceleration of load, the weight of which is measured.

It is also possible that the assessment of reliability comprises determining latitude of location of the weighing system. The location/latitude information may be received from a satellite receiver such as GPS, from a base station of a cellular communication system, via the Internet, or the location/latitude information may be input manually to the weighing system by a user. For example, the increment of presentation may change if the location of the weighing system is such that the latitude of the location differs by at least a determined amount from the latitude of original location where the weighing system has been calibrated.

Based on the location information, it is also possible to receive latitude and weather condition information through a communication network such as the Internet. Such weather information may include temperature, humidity, wind speed and direction values etc. In this case it is not necessary to measure the weather conditions in the weighing system, and not respective sensors are needed. If such information is received from a network it is also possible that the weighing system is arranged to select the source(s) of such information.

In one embodiment of the invention the assessment of the reliability comprises determining a figure of merit. In a further embodiment the figure of merit is determined from weight measurement samples, measurement-disturbing quantities, measurement results for disturbing signals, and/or from combinations of the above.

In one embodiment of the invention a figure of merit, measured values environmental conditions and/or the determined increment value of presentation is reported to a user. In a further embodiment the reporting comprises showing on a display along with a weighing result, storing in a log memory in logical association with a weighing result, and/or presenting on a document along with a weighing result.

It is possible to achieve significant advantages with the present invention. The present inventive method and arrangement can be used for providing measurements even in such conditions where a weighing system does not fulfill a specified reliability. It is thus not necessary to use special, expensive weighing equipment that are designed for conditions that are outside normal ranges.

The invention can be used in various weighing applications. For example, in scales for weighing moving trains, one environmental condition can be speed of load i.e. train. The scales may be specified for certain speed range to provide a specified weighing reliability. However, according to the invention the scales may also weigh trains that move with a speed outside the specified range, but the weighing result will be presented with higher increment value of presentation.

It is possible to apply the invention by using two alternative increment values of presentation, or it is possible to use three or more alternative increment values. The value of a figure of merit can, for example, be classified to correspond to different increment values of presentation depending on the value of the figure of merit.

### BRIEF DESCRIPTION OF DRAWINGS

A few preferred embodiments of the invention are next described in more detail with reference to the accompanying drawings, in which
Fig. 1 illustrates an exemplary embodiment for a method of the invention in a flow chart, and
Fig. 2 illustrates an exemplary embodiment for a weighing system of the invention in a block diagram.

### DETAILED DESCRIPTION OF SOME EMBODIMENTS

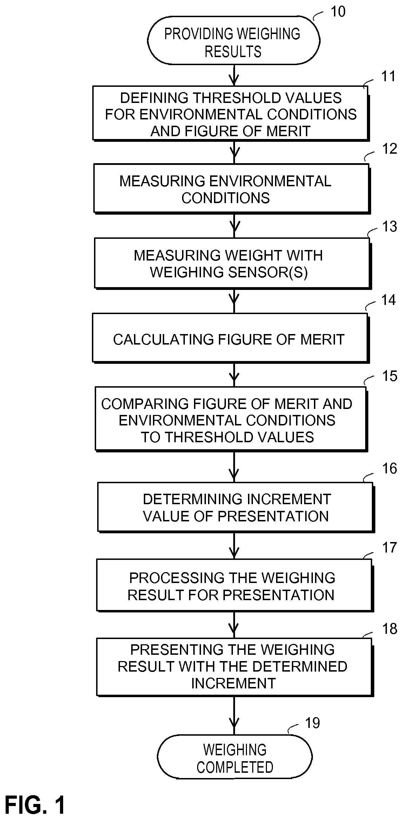

Fig. 1 illustrates a flow chart of an exemplary method according to the invention for providing weighing results 10. In phase 11 threshold values are defined for environmental conditions and/or a figure of merit. These threshold values preferably determine a range in which the basic reliability of the weighing system is valid. It is also possible that there are several ranges with different reliability specifications, whereby the corresponding threshold values are also determined. For example, the figure of merit may have a threshold value 10, which determines a threshold for basic reliability of the weighing system. When the figure of merit is above this value, the basic specifications of the weighing system are fulfilled. The increment value of presentation may be e.g. 0,1 kg. The presented weight result can thus have one of values 0,0 kg, 0,1 kg, 0,2 kg, 0,3 kg,... There may be a further threshold value 5, for example, whereby in range 5... 10 of the figure of merit the weighing system has a degraded reliability according to degraded specifications. In this range, the increment value of presentation may be e.g. 1 kg, and the presented weight result can thus have one of values 0 kg, 1 kg, 2 kg, 3 kg,.... And finally, if the figure of merit is below 5 the reliability specifications of the weighing system do not apply. In that case the increment value of presentation may be 5 kg, for example, and the presented weight result can thus have one of values 0 kg, 5 kg, 10 kg, 15 kg,....

In step 12 environmental conditions are measured. These conditions may include acceleration, temperature, electromagnetic radiation, air pressure, humidity, wind speed, wind direction, an angle of inclination, and/or movement or acceleration of load, for example. However, the weight of the load is not regarded as an environmental condition.

Weight of the load is then measured in phase 13 with one or several weighing sensors. The weighing sensors normally give an analog signal, which is the converted into digital form and possibly buffered. It is also possible that the weighing sensor comprises sensors that measure environmental conditions, and this information is thus received from the same sensor unit as the weigh information. In phase 14 a figure of merit is calculated. In calculation, successive weighing samples of the weighing sensor signal may be used, and measured values of environmental conditions can also be used. It is further possible to use measurement of disturbing signals for determining the figure of merit. This figure of merit is calculated by a calculation program for measurement results, for example, based on analysis involving the number or breakdown of weight measurement samples, the peaks or variance of samples, the differences between measurement samples obtained from various weighing sensors (if the system consists of several sensors) or the like or a combination of some of the above.

In phase 15 the calculated figure of merit is compared with the determined threshold value(s). Alternatively or additionally it is possible to compare measured environmental conditions with the corresponding threshold value(s). The result of the comparison(s) is then used in phase 16 for determining the increment value of presentation for weighing result.

In phase 17 the weighing result is processed into a form which is in accordance with the increment value of presentation which was determined in phase 16. The processed measurement result is then presented in phase 18, whereby the weighing is completed, 19. The presentation of the weighing result may include showing the result on a display, on a printed document of providing the result in an electronic form. It is also possible that information on the environmental conditions, figure of merit or the specification range used is presented to the user. It is further possible that the user is informed if the increment of presentation is changed into a larger value, and the reason for the change may also be informed. The presentation can be done with the same manner as presenting the weighing result, and this information can also be presented together with the weighing result.

It should be noted that the phase 11 for determining threshold values may be performed once, and the determined threshold values can then be used in several following weighing procedures. It is also possible that the determined threshold values are permanently stored into the weighing system and they are not changed.

The weighing data and the environmental/condition data are preferably stored onto a log storage of the weighing system. This way it is possible to check afterwards the results and conditions in which the weighing has been performed and that the weighing system has performed the weighing in a correct manner, including the selection of the increment of presentation. It is also possible that such data is further transferred to other location through communication network such as the Internet and/or wireless cellular communication network. The verification of data can thus be performed also in a location which is distant from the weighing system.

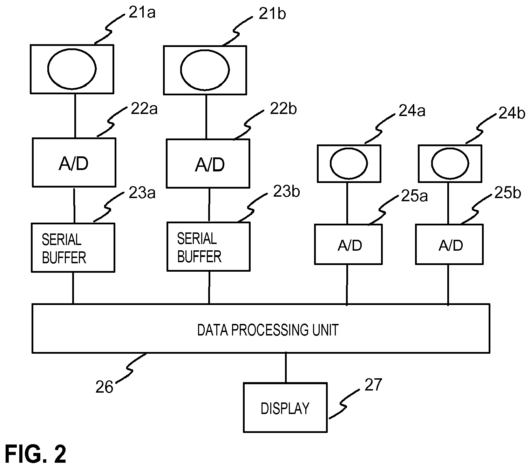

Figure 2 illustrates a block diagram of an exemplary weighing system according to the invention. In this exemplary system there are two weighing sensors 21a and 21b. The analog signals from these sensors are converted into digital form in respective A/D converters 22a and 22b. The weighing data is buffered in serial buffers 23a and 23b. The converters and buffers may locate in the sensor unit or in a separate unit, for example. The data is read by data processing unit 26. The exemplary weighing system also has two sensors 24a and 24b for measuring environmental conditions. These sensors may be a temperature sensor and an accelerometer, for example. The signals of these sensors are also converted into digital form in A/D converters 25a and 25b, and read by the data processing unit. It is also possible that the weighing sensor and the environmental sensor(s) are in a same sensor unit, together with an A/D converter and a buffer. Such a sensor unit may then provide both weighing data and environmental data.

The data processing unit performs the calculations for determining figure of merit and values for environmental conditions. The data processing unit also processes the weighing result data into a form that corresponds to the figure of merit and/or information on environmental conditions. The exemplary weighing system has a display 27 for presenting the weighing results and possibly values for figure of merit and/or environmental conditions. The means for presentation may alternatively be a printer or an electrical storage, for example. It is also possible that results are transmitted to distant locations through communication common channels, such as the Internet. The data processing unit may be a combination of a microprocessor and a memory in a weighing device, or the data processing unit may be a PC computer or equivalent, which may also have other functions in addition to weighing.

It should be noted that the inventive functions also require a suitable program product. Control functions and data processing in devices generally takes place in an arrangement of processing capacity in the form of microprocessor(s) and memory in the form of memory circuits. To convert a known device or system into equipment according to the invention it is necessary, in addition to the hardware modifications, to store into the memory means a set of machine-readable instructions that instruct the microprocessor(s) to perform the operations described above. Composing and storing into memory of such instructions involves known technology which, when combined with the teachings of this patent application, is within the capabilities of a person skilled in the art.

The invention has been described above with reference to the enclosed exemplary embodiments. The inventive solution can be preferably applied in scales and weighing appliances dealing with automobiles, trains, bridges, processes, laboratories, wheel loaders, forklift trucks, pallet trucks, cranes, excavators, reach trucks, garbage trucks, timber jacks, vehicles, truck cranes and other preferred scales and weighing systems.

The above description deals with several major industrial and commercial benefits achieved by the inventive method. The present inventive method and arrangement can be used for providing measurements even in conditions where a weighing system does not fulfill a specified reliability. It is thus not necessary to use special, expensive weighing equipment that are designed for conditions that are outside normal ranges.

The invention has been discussed above with reference to the enclosed embodiments. It is obvious, however, that the invention is not limited solely to those but encompasses all embodiments falling within the inventive concept as defined in the annexed claims.

## Claims

1. A method for providing weighing results, wherein weight of a load is measured with a weighing sensor and weighing result of the measurement is presented, and for presenting weighing results the measurement result data is processed to apply a increment between non-equal values of weighing result presentations, **characterized by**
- measuring with an environmental sensor acceleration, temperature, electromagnetic radiation, air pressure, humidity, wind speed, wind direction, an angle of inclination, and/or speed or acceleration of load to assess environmental condition of the weighing system,
- assessing actual reliability of a weighing result on the basis of the measured environmental condition,
- determining said increment value of presentation on the basis of said assessment, and
- processing the measurement result data to apply the determined increment value of presentation in presenting the measured weighing result.

2. A method according to claim 1, wherein the assessment of the reliability comprises also receiving information on environmental conditions.

3. A method according to claim 1, wherein speed of load is measured as an environmental condition of the weighing system, and the increment of presentation of the moving load is determined based on whether the load speed is within a predetermined speed range.

4. A method according to any preceding claim, wherein the assessment of the reliability also comprises determining a figure of merit.

5. A method according to claim 5, wherein said figure of merit is determined from weight measurement samples, measurement-disturbing quantities, measurement results for disturbing signals, and/or from combinations of the above.

6. A method according any preceding claim, wherein a figure of merit, measured values environmental conditions and/or the determined increment value of presentation is reported to a user.

7. A method according to claim 6, wherein the reporting comprises showing on a display along with a weighing result, storing in a log memory in logical association with a weighing result, and/or presenting on a document along with a weighing result.

8. An arrangement for providing weighing results, the arrangement comprising means for measuring weight of a load and means for presenting a measurement result, and the arrangement further comprising means for processing measurement result data to apply a increment between non-equal values of weighing result presentations **characterized by** comprising
- an environmental sensor, which comprises an acceleration sensor, temperature sensor, sensor for electromagnetic radiation, air pressure sensor, humidity sensor, wind speed sensor, wind direction sensor, an angle of inclination sensor and/or load speed or load acceleration sensor, to assess environmental condition of the weighing system,
- means for assessing actual reliability of a weighing result on the basis of the measured environmental condition,
- means for determining said increment value of presentation on the basis of said assessment, and
- means for processing the measurement result data to apply the determined increment value of presentation in presenting the measured weighing result.

9. An arrangement according to claim 8, wherein the means for assessing the reliability comprises means for receiving information on environmental conditions.

10. An arrangement according to any of claims 8-9 wherein the means for assessing the reliability comprises means for determining a figure of merit.

11. An arrangement according to any of claims 8-10, comprising means for reporting to a user a calculated figure of merit, measured values environmental conditions and/or the determined increment value of presentation.

12. An arrangement to claim 11, wherein the means for reporting comprises means for showing on a display along with a weighing result, means for storing in a log memory in logical association with a weighing result, and/or means for presenting on a document along with a weighing result.

13. An arrangement according to any of claims 10-12, comprising means for determining said figure of merit from weight measurement samples, measurement-disturbing quantities, measurement results for disturbing signals, and/or from combinations of the above.

## Patentansprüche

1. Verfahren zum Bereitstellen von Wiegeergebnissen, wobei das Gewicht einer Last mit einem Wiegesensor gemessen und ein Wiegeergebnis dargestellt wird und zum Darstellen von Wiegeergebnissen die Messergebnisdaten zum Anwenden eines Inkrements zwischen nichtgleichen Werten von Wiegeergebnisdarstellungen verarbeitet werden, **gekennzeichnet durch**
- Messen, mit einem Umgebungssensor, von Beschleunigung, Temperatur, elektromagnetischer Strahlung, Luftdruck, Feuchtigkeit, Windgeschwindigkeit, Windrichtung, einem Neigungswinkel und/oder Geschwindigkeit oder Beschleunigung von Last zum Beurteilen einer Umgebungsbedingung des Wiegesystems,
- Beurteilen von tatsächlicher Zuverlässigkeit eines Wiegeergebnisses auf der Grundlage der gemessenen Umgebungsbedingung,
- Bestimmen des Darstellungsinkrementwerts auf der Grundlage der Beurteilung, und
- Verarbeiten der Messergebnisdaten zum Anwenden des bestimmten Darstellungsinkrementwerts beim Darstellen des gemessenen Wiegeergebnisses.

2. Verfahren nach Anspruch 1, wobei die Beurteilung der Zuverlässigkeit außerdem das Empfangen von Information über Umgebungsbedingungen umfasst.

3. Verfahren nach Anspruch 1, wobei Geschwindigkeit von Last als eine Umgebungsbedingung des Wiegesystems gemessen wird und das Darstellungsinkrement der sich bewegenden Last basierend darauf bestimmt wird, ob die Lastgeschwindigkeit innerhalb eines vorgegebenen Geschwindigkeitsbereichs liegt.

4. Verfahren nach einem der vorhergehenden Ansprüche, wobei die Beurteilung der Zuverlässigkeit außerdem das Bestimmen einer Gütezahl umfasst.

5. Verfahren nach Anspruch 5, wobei die Gütezahl aus Gewichtsmessungsproben, messungsstörenden Mengen, Messergebnissen für Störsignale und/oder aus Kombinationen des obigen bestimmt wird.

6. Verfahren nach einem der vorhergehenden Ansprüche, wobei eine Gütezahl, Messwerte von Umgebungsbedingungen und/oder der bestimmte Darstellungsinkrementwert einem Benutzer gemeldet wird.

7. Verfahren nach Anspruch 6, wobei das Melden das Zeigen auf einer Anzeige zusammen mit einem Wiegeergebnis, Speichern in einem Protokollspeicher in logischer Assoziation mit einem Wiegeergebnis und/oder Darstellen auf einem Dokument zusammen mit einem Wiegeergebnis umfasst.

8. Anordnung zur Bereitstellung von Wiegeergebnissen, die Anordnung umfassend Mittel zum Messen eines Gewichts einer Last und Mittel zum Darstellen eines Messergebnisses, und wobei die Anordnung ferner Mittel zum Verarbeiten von Messergebnisdaten zum Anwenden eines Inkrements zwischen nichtgleichen Werten von Wiegeergebnisdarstellungen umfasst, **dadurch gekennzeichnet, dass** sie umfasst
- einen Umgebungssensor, der einen Beschleunigungssensor, Temperatursensor, Sensor für elektromagnetische Strahlung, Luftdrucksensor, Feuchtigkeitssensor, Windgeschwindigkeitssensor, Windrichtungssensor, einen Neigungswinkelsensor und/oder Lastgeschwindigkeits- oder Lastbeschleunigungssensor zum Beurteilen einer Umgebungsbedingung des Wiegesystems umfasst,
- Mittel zum Beurteilen von tatsächlicher Zuverlässigkeit eines Wiegeergebnisses auf der Grundlage der gemessenen Umgebungsbedingung,
- Mittel zum Bestimmen des Darstellungsinkrementwerts auf der Grundlage der Beurteilung, und
- Mittel zum Verarbeiten der Messergebnisdaten zum Anwenden des bestimmten Darstellungsinkrementwerts beim Darstellen des gemessenen Wiegeergebnisses.

9. Anordnung nach Anspruch 8, wobei das Mittel zum Beurteilen der Zuverlässigkeit Mittel zum Empfangen von Information über Umgebungsbedingungen umfasst.

10. Anordnung nach einem der Ansprüche 8 bis 9, wobei das Mittel zum Beurteilen der Zuverlässigkeit Mittel zum Bestimmen einer Gütezahl umfasst.

11. Anordnung nach einem der Ansprüche 8 bis 10, umfassend Mittel zum Melden, an einen Benutzer, einer errechneten Gütezahl, von Messwerten von Umgebungsbedingungen und/oder des bestimmten Darstellungsinkrementwerts.

12. Anordnung nach Anspruch 11, wobei das Mittel zum Melden Mittel zum Zeigen auf einer Anzeige zusammen mit einem Wiegeergebnis, Mittel zum Speichern in einem Protokollspeicher in logischer Assoziation mit einem Wiegeergebnis und/oder Mittel zum Darstellen auf einem Dokument zusammen mit einem Wiegeergebnis umfasst.

13. Anordnung nach einem der Ansprüche 10 bis 12, umfassend Mittel zum Bestimmen der Gütezahl aus Gewichtsmessungsproben, messungsstörenden Mengen, Messergebnissen für Störsignale und/oder aus Kombinationen des obigen.

## Revendications

1. Procédé destiné à fournir des résultats de pesage, dans lequel le poids d'une charge est mesurée avec un capteur de pesage et un résultat de pesage de la mesure est présenté, et pour la présentation des résultats de pesage, les données de résultat de mesure sont traitées pour l'application d'un incrément entre des valeurs non égales de présentations du résultat de pesage, **caractérisé par**
- la mesure, avec un capteur environnemental, de l'accélération, de la température, du rayonnement électromagnétique, de la pression atmosphérique, de l'humidité, de la vitesse du vent, de la direction du vent, d'un angle d'inclinaison, et/ou de la vitesse ou de l'accélération d'une charge, pour l'évaluation des conditions environnementales du système de pesage,
- l'évaluation de la fiabilité effective d'un résultat de pesage sur la base des conditions environnementales mesurées,
- la détermination de ladite valeur d'incrément de présentation sur la base de ladite évaluation, et
- le traitement des données de résultat de mesure pour l'application de la valeur d'incrément déterminée de la présentation dans la présentation du résultat de pesage mesuré.

2. Procédé selon la revendication 1, dans lequel l'évaluation de la fiabilité comprend également la réception d'informations sur les conditions environnementales.

3. Procédé selon la revendication 1, dans lequel la vitesse de charge est mesurée en tant que condition environnementale du système de pesage, et l'incrément de présentation de la charge en déplacement est déterminé selon que la vitesse de charge est comprise dans une plage de vitesse prédéterminée.

4. Procédé selon l'une quelconque des revendications précédentes, dans lequel l'évaluation de la fiabilité comprend également la détermination d'un facteur de mérite.

5. Procédé selon la revendication 5, dans lequel ledit facteur de mérite est déterminé à partir d'échantillons de mesure de poids, de quantités de perturbation de mesure, de résultats de mesure pour des signaux perturbateurs, et/ou de combinaisons de ceux-ci.

6. Procédé selon l'une quelconque des revendications précédentes, dans lequel un facteur de mérite, des conditions environnementales de valeurs mesurées et/ou la valeur d'incrément mesurée de la présentation sont communiqués à un utilisateur.

7. Procédé selon la revendication 6, dans lequel la communication comprend l'affichage sur un écran ensemble avec un résultat de pesage, le stockage dans une mémoire d'accès en association logique avec un résultat de pesage, et/ou la présentation sur un document ensemble avec un résultat de pesage.

8. Dispositif destiné à fournir des résultats de pesage, le dispositif comprenant un moyen de mesure du poids d'une charge et un moyen de présentation d'un résultat de mesure, et le dispositif comprenant en outre un moyen de traitement des données de résultat de mesure pour l'application d'un incrément entre des valeurs non égales de présentations de résultat de pesage, **caractérisé en ce qu'**il comprend
- un capteur environnemental comprenant un capteur d'accélération, un capteur de température, un capteur de rayonnement électromagnétique, un capteur de pression atmosphérique, un capteur d'humidité, un capteur de vitesse du vent, un capteur de direction du vent, un capteur d'angle d'inclinaison, et/ou un capteur de vitesse ou d'accélération d'une charge, pour l'évaluation des conditions environnementales du système de pesage,
- un moyen d'évaluation de la fiabilité effective d'un résultat de pesage sur la base des conditions environnementales mesurées,
- un moyen de détermination de ladite valeur d'incrément de présentation sur la base de ladite évaluation, et
- un moyen de traitement des données de résultat de mesure pour l'application de la valeur d'incrément déterminée de la présentation dans la présentation du résultat de pesage mesuré.

9. Dispositif selon la revendication 8, dans lequel le moyen d'évaluation de la fiabilité comprend un moyen de réception des informations sur les conditions environnementales.

10. Dispositif selon l'une quelconque des revendications 8 et 9, dans lequel le moyen d'évaluation de la fiabilité comprend un moyen de détermination d'un facteur de mérite.

11. Dispositif selon l'une quelconque des revendications 8 à 10, comprenant un moyen de communication d'un facteur de mérite calculé, des conditions environnementales de valeurs mesurées et/ou de la valeur d'incrément déterminée de la présentation à un utilisateur.

12. Dispositif selon la revendication 11, dans lequel le moyen de communication comprend un moyen d'affichage sur écran, ensemble avec un résultat de pesage, un moyen de stockage dans une mémoire d'accès en association logique avec un résultat de pesage, et/ou un moyen de présentation sur un document ensemble avec un résultat de pesage.

13. Dispositif selon l'une quelconque des revendications 10 à 12, comprenant un moyen de détermination dudit facteur de mérite à partir d'échantillons de mesure de poids, de quantités de perturbation de mesure, de résultats de mesure pour des signaux perturbateurs, et/ou de combinaisons de ceux-ci.
